(19)

Europäisches
Patentamt
European
Patent Office
Office européen
des brevets

(11) **EP 1 984 971 B1**

(12) **EUROPEAN PATENT SPECIFICATION**

(45) Date of publication and mention
of the grant of the patent:
**09.11.2011  Bulletin 2011/45**

(51) Int Cl.:
***H01M 8/04*** *(2006.01)*

(21) Application number: **07705490.6**

(22) Date of filing: **31.01.2007**

(86) International application number:
**PCT/IB2007/000209**

(87) International publication number:
**WO 2007/088449 (09.08.2007 Gazette 2007/32)**

(54) **CONTROLLING THE REQUESTED POWER OUTPUT OF A FUEL CELL SYSTEM**

STEUERUNG DER ANGEFORDERTEN AUSGANGSLEISTUNG EINES
BRENNSTOFFZELLENSYSTEMS

COMMANDE DE PUISSANCE REQUISE D'UN SYSTÈME DE PILE À COMBUSTIBLE

(84) Designated Contracting States:
**DE FR GB**

(30) Priority: **31.01.2006   JP 2006022735**

(43) Date of publication of application:
**29.10.2008   Bulletin 2008/44**

(73) Proprietor: **Nissan Motor Co., Ltd.**
**Kanagawa 221-0023 (JP)**

(72) Inventors:
 • **MATSUMOTO, Michihiko**
**Kanagawa 243-0192 (JP)**

 • **SUZUKI, Keisuke**
**Kanagawa 243-0192 (JP)**

(74) Representative: **Brochard, Pascale et al**
**Osha Liang**
**32 avenue de l'Opéra**
**75002 Paris (FR)**

(56) References cited:
**WO-A-2006/033420     JP-A- 2004 185 821**
**JP-A- 2004 335 343     US-A1- 2002 172 847**
**US-A1- 2005 244 688**

**Description**

TECHNICAL FIELD

) The present invention pertains to a type of fuel cell system that uses an accessory to generate electric power from a fuel cell.

BACKGROUND

When a fuel cell system is carried on a vehicle, an accessory, such as a compressor to provide gas to the fuel cell system may also be carried a powered by the fuel cell. In order to control the electric power generation of the fuel cell, first of all, the necessary electric power required by the vehicle for driving the vehicle is determined as the target net electric power. Then, based on the target net electric power, a target gross electric power (total target electric power generation) needed for electric power generation of the fuel cell is computed considering the target net electric power for the vehicle and also the electric power consumed by the accessory, and based on the total target gross electric power, total electric power generation of the fuel cell is controlled.

The total target gross electric power is needed so that the power to be drawn from the fuel cell system can be controlled. The total target power will include the power required for driving the vehicle which may be determined in standard ways. Alternate methods for computing the anticipated accessory power consumption have been proposed. According to one method for computing the accessory electric power consumption is computed by using a sensor on the accessory and feeding back a load parameter of the accessory (as for example in the case of the accessory being a compressor the load parameter might be the sensed rotation velocity, torque, and etc.) and the accessory electric power consumption is computed based upon the load parameter that is sensed an fed back to the computing device.

In another method for computing the accessory power so that the target gross electric power can be computed, a chart, or map a representing the steady characteristics of the fuel cell (as for example a computerized lookup table or the like that shall be referred to herein as a "map") is prepared beforehand, and the target net electric power is input to the map to compute the accessory electric power consumption and so that the target gross electric power may be determined.

The map may be used in computing the target gross electric power for use in controlling the accessory. When a load parameter of the accessory to be controlled is fed back, a control loop is formed with the accessory state as the input (positive feedback), so that control is performed in an iterative back and forth process.

Japanese Kokai Patent Application No. 2004-185821 (Patent Reference 1) disclosed a method for controlling the electric power generation in a fuel cell system carried on a vehicle.

In the conventional fuel cell system, such as that disclosed Japanese Kokai Patent Application No. 2004-185821, map searching is performed for the electric current value (WC) of the compressor that is the required electric power needed for supplying air required for generating only the fuel cell required electric power net value (WFCnet) without considering that a portion of the electric power generated by the fuel cell will be consumed by the compressor (accessory).

SUMMARY

It has been found by the inventors that in a conventional fuel cell system control of the accessory is performed based on the target gross electric power determined using a map. Thus, the electric power value required by the compressor that is computed from the map is not in agreement with the actual electric power that will be drawn from the fuel cell. A deviation takes place between the target gross electric power for control of the electric power required for the vehicle and that the electric power required for control of the accessory. The amount of gas supplied to the fuel cell and thereby reacted at the in the fuel cell to produce electric power is directly proportional to the power generated. Consequently, when the gas supply is controlled according to the target gross electric power determined by the map method, there is discrepancy between the electric power drawn from the fuel cell and gas supply. Drawing or attempting to draw more current than there is gas to produce the current leads to deterioration in the performance of the fuel cell stack. In situations where too much current is drawn, deterioration is generally due to drying of the polymer electrolysis membrane and hydrogen insufficiency. This is not a desired result.

In one embodiment of the present invention a fuel cell system includes a load parameter detector that detects one or more load parameters of an accessory. An actual accessory power computing device computes the actual accessory electric power consumption of the accessory based upon one or more of the detected load parameters. A steady accessory power computing device that computes the electric power consumed by the accessory as needed for generating the electric power required from the fuel cell system. This provides a value that may be called the steady accessory electric power consumption and the computation is based on the steady characteristics of the accessory for performing at a stabilized steady condition. An accessory power correcting device that computes an electric power correction quantity that may be combined with the steady accessory electric power consumption so that the combined steady accessory power consumption and the computed power consumption correction will approach the actual accessory electric power consumption and the correction device further uses the accessory electric power correction quantity to correct the steady accessory electric power consumption. A power generation controller controls power generation of the fuel cell system based on the required electric power generation and the steady accessory electric power consumption corrected by the accessory electric power consumption correcting device.

According to one embodiment, of the present invention, the fuel cell system is controlled to provide the amount of gas required to produce the total actual power required. Thus, even if the steady characteristics of the accessory electric power consumption vary due to degradation over time or even if there is a design error, it is still possible to use an actual load parameter of the accessory to compute the electric power correction quantity for correction. As a result, it is possible to suppress discrepancy between the gas supply and the electric power drawn from the fuel cell as required for the drive system and the total actual power consumed by the accessory.

BRIEF DESCRIPTION OF DRAWINGS

Figure 1 is a block diagram illustrating an example construction of the fuel cell system in one or more embodiments of the present invention.

Figure 2 is a block diagram illustrating the construction of the controller of the fuel cell system in one or more embodiments of the present invention.

Figure 3 is a flow chart illustrating a process of control of electric power generation using the fuel cell system in Embodiment 1 of the present invention.

Figure 4 is a flow chart illustrating a process for computing of the required electric power generation by the fuel cell system according to one or more embodiments of the present invention.

Figure 5 is a diagram illustrating map data for computation of the required electric power generation based on the amount of accelerator pedal manipulation and the vehicle velocity.

Figure 6 is a flow chart illustrating a process for computing the target total electric power generation by the fuel cell system in one or more embodiments of the present invention.

Figure 7 is a flow chart illustrating a process for computing the accessory electric power consumption by the fuel cell system in one or more embodiments of the present invention.

Figure 8 is a flow chart illustrating a judgment process by the fuel cell system based upon learning of an execution permission pertaining to one or more embodiments of the present invention.

Figure 9 is a flow chart illustrating a process by the fuel cell system for computing the electric power correction quantity according to one or more embodiments of the present invention.

Figure 10 is a flow chart illustrating the storage processing of the electric power correction quantity of the fuel cell system according to one or more embodiments of the present invention.

Figure 11 is a flow chart illustrating the processing of computation of the electric power correction quantity by the fuel cell system according to one or more embodiments of the present invention.

Figure 12 is a flow chart illustrating the processing of computation of the target total electric power generation by the fuel cell system according to one or more embodiments of the present invention.

Figure 13 is a diagram illustrating map data for computation of the target generated current based upon the target total electric power generation and the operating temperature.

Figure 14 is a flow chart illustrating the process for controlling the gas supply by the fuel cell system according to one or more embodiments of the present invention.

Figure 15 is a diagram illustrating map data for computation of the target gas pressure based upon a target electric power to be generated by the fuel cell system.

Figure 16 is a diagram illustrating map data for computing a target air flow rate based upon a target electric power to be generated by the fuel cell system.

Figure 17 is a diagram illustrating map data for computing an instructed rotation velocity for a compressor based upon the target air flow rate and a target gas pressure.

Figure 18 is a time chart illustrating a variation in electric power in a comparative example.

Figure 19 is a time chart illustrating variation in the electric power when the process of controlling the electric power generation is performed according to one or more embodiments of the present invention is performed.

Figure 20 is a flow chart illustrating the processing of computation of the target total electric power generation by the fuel cell system according to one or more embodiments of the present invention.

Figure 21 is a diagrammatic time chart illustrating a variation in electric power in a comparative example.

Figure 22 is a diagrammatic time chart illustrating a variation in electric power when the process of controlling the electric power generation is performed according to one or more embodiments of the present invention is executed.

Figure 23 is a diagram illustrating correction control according to one or more embodiments of the present invention.

DETAILED DESCRIPTION

In the following, an explanation will be given regarding one or more embodiments of the present invention with respect to figures. Exemplary embodiments of the invention will be described with reference to the accompanying figures. Like items in the figures are shown with the same reference numbers.

In describing the various embodiments of the invention, numerous specific details are set forth in order to provide a more thorough understanding of the invention. However, it will be apparent to one of ordinary skill in the art that the invention may be practiced without these specific details. In other instances, well-known features have not been described in detail to avoid obscuring the invention.

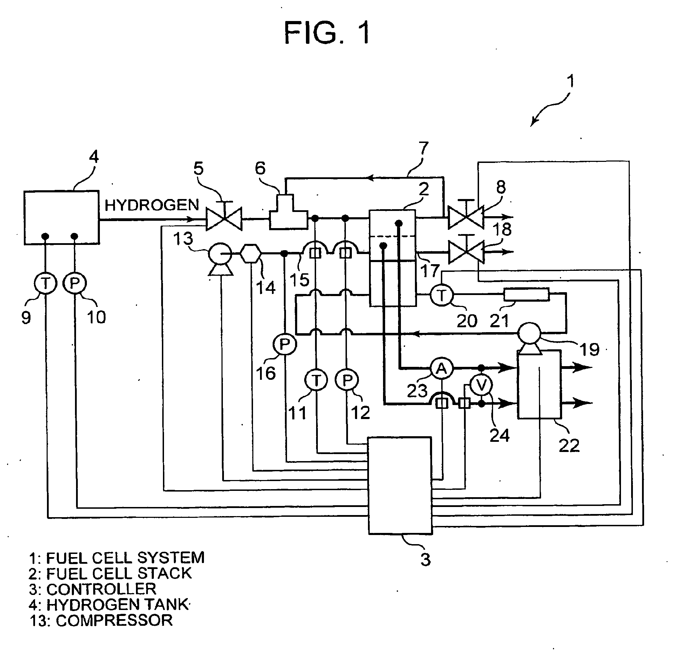

Figure 1 is a block diagram illustrating the construction of the fuel cell system of the presently described embodiment. The fuel cell system 1 according to one embodiment may be constructed with the following interrelated parts. There is a fuel cell stack 2 that generates electric power by means of an electrochemical reaction when fuel gas and oxidant gas are supplied to the fuel cell stack 2. A controller 3 controls the entirety of fuel cell system 1 in its various operations and processes. A hydrogen tank 4 stores hydrogen gas so that it may be supplied to the fuel cell stacks 2. A hydrogen pressure control valve 5 adjusts the pressure of the hydrogen gas supplied from hydrogen tank 4 to the fuel cell stack 2. An ejector 6 is interposed and blends the hydrogen gas supplied from hydrogen tank 4 with recycled hydrogen gas that was not previously consumed by reacting in the fuel cell stack 2. There is a hydrogen circulating flow path 7 that recycles hydrogen gas not consumed in fuel cell stack 2. A hydrogen purging valve 8 is provided for exhausting impurities in the gas not used during the reaction in the fuel cell stack 2. A tank temperature sensor 9 is operatively connected to detect the temperature inside hydrogen tank 4. A tank pressure sensor 10 is operatively connected to detect the pressure in hydrogen tank 4. A hydrogen inlet temperature sensor 11 is operatively connected to detect the temperature of hydrogen at an anode inlet of the fuel cell stack 2. A hydrogen inlet pressure sensor 12 is operatively connected to detect the pressure of hydrogen at the anode inlet of the fuel cell stack 2. A compressor 13 that pressurizes air and supplies the pressurized air to the cathode of fuel cell stack 2. In this embodiment the compressor 13 is considered as an example of an accessory for the fuel cell system 1 and may sometimes be referred to herein as accessory 13. An air flow rate sensor 14 is operatively connected to detect the air flow rate supplied from compressor 13. An air supply flow path 15 is operatively connected to carry air from compressor 13 3 to a cathode of the fuel cell stack 2. An air inlet pressure sensor 16 is operatively connected to detect the air pressure at the cathode inlet of the fuel cell stack 2. An exhaust air flow path 17 is operatively connected to exhaust the air from the cathode of the fuel cell stack 2 An air pressure control valve 18 is operatively connected to control the air pressure in the fuel cell stack 2. A coolant circulating pump 19 circulates a coolant for cooling the fuel cell stack 2. A coolant temperature sensor 20 is operatively connected to detect the coolant exhaust temperature from fuel cell stack 2. A heat exchanger 21 is operatively connected to dissipate heat and to cool the circulated coolant. An electric power controller 22 is operatively connected to control the electric power generated by the fuel cell stack 2. A current sensor 23 is operatively connected to detect the output electric current of the fuel cell stack 2, and a voltage sensor 24 is operatively connected to detect the output voltage of the fuel cell stack 2 so that the output power may be computed.

In such a fuel cell system 1, when hydrogen gas is fed as fuel gas to the anode of the fuel cell stack 2 and air is fed as oxidant gas to the cathode of the fuel cell stack 2, the following electrochemical reactions take place to generate electric power.

Anode (fuel electrode): $H_2 \rightarrow 2H+ + 2e-$ (1)

Cathode (oxidant electrode): $2H+ + 2e- + (1/2)(O_2) \rightarrow H_2O$ (2)

A hydrogen supply system supplies hydrogen as a fuel gas to the anode of fuel cell stack 2. In such a hydrogen supply system, the hydrogen gas may be stored in a hydrogen tank 4 at a high pressure relative to atmospheric pressure. The temperature and pressure inside the hydrogen tank 4 are measured with a tank temperature sensor 9 and a tank pressure sensor 10, respectively. The pressure of the high pressure hydrogen gas supplied from hydrogen tank 4 is controlled by a hydrogen pressure control valve 5, and the hydrogen gas is supplied to the ejector 6. In the ejector 6, the high pressure hydrogen from the storage tank 4 is blended with recycled hydrogen that has previously passed through the hydrogen circulating flow path 7. The blended hydrogen is supplied from the ejector 6 to the fuel cell stack 2. The temperature and pressure of the hydrogen at the anode inlet of fuel cell stack 2 are detected by a hydrogen inlet temperature sensor 11 and a hydrogen inlet pressure sensor 12, respectively. All of the temperature and pressure sensors produce signals representing the respectively detected temperatures and pressures and the signals are sent to controller 3 as separately identifiable signals. The hydrogen pressure control valve 5 is controlled based upon the inlet pressure measured with the hydrogen inlet pressure sensor 12. With a hydrogen purging valve 8 in a normally closed position, the hydrogen exhausted from fuel cell stack 2 usually flows in the hydrogen circulating flow path 7. If overflow of water (flooding) or the like takes place inside fuel cell stack 2 or if the operating pressure of fuel cell stack 2 falls, or the like, the hydrogen purging valve 8 is opened, so that the hydrogen present in hydrogen circulating flow path 7 and in the fuel cell stack 2 may be exhausted. The operating pressure of fuel cell stack 2 can be adjusted by controller 3. Control of the operating pressure may be used to control the output power produced by the fuel cell stack. Thus, the gas pressure may be set appropriately depending on the output power drawn from the fuel cell stack 2. The operating temperature also predictably affects the reaction within the fuel cell stack so that the temperature is also considered in connection with setting the pressure to generate the desired electric power to be drawn from the fuel cell system.

In this embodiments, an air supply system supplies air as the oxidant gas by suctioning air from the ambient atmosphere, for example by using a compressor 13. The suctioned air is pressurized by compressor 13 and sent out to the fuel cell stack 2. The sent air is measured with an air flow rate sensor 14, it is sent through an air supply flow path 15, and it is supplied to the cathode of fuel cell stack 2. In this embodiment, the air pressure at the cathode inlet of fuel cell stack 2 is detected by an air inlet pressure sensor 16. The opening position of an air pressure control valve 18 is controlled by controller 3 based upon the detected inlet air pressure, the detected air flow rate, and desired air flow rate.

A cooling system cools fuel cell stack 2. Fluid coolant for cooling the fuel cell stack 2 is circulated by a coolant circulating pump 19. The circulated coolant is warmed by absorbing heat from fuel cell stack 2. The temperature of the circulated coolant is measured with coolant temperature sensor 20, and the coolant is then sent to a heat exchanger 21 where it releases heat, and is cooled and is re-circulated by the coolant circulating pump.

The output current of fuel cell stack 2 is detected by a current sensor 23, and the output voltage is detected by a voltage sensor 24, and signals representing the current and voltage are output to controller 3. Also, the electric power drawn from the fuel cell stack 2 is controlled with an electric power controller 22. This electric power controller 22 may comprise a voltage boosting/lowering DC/DC converter that is operatively connected between the fuel cell stack 2 and an external motor or another external load to control the electric power drawn from fuel cell stack 2. In the DC/DC converter, different switching elements work in voltage boosting and voltage lowering conversion, and it is possible to output the desired voltage corresponding to the duty ratio of the control signal applied to the switching elements. As a result, the switching elements may be usefully controlled so that a voltage higher than the input voltage is output in the voltage boosting mode, and a voltage lower than the input voltage is output in the voltage lowering mode.

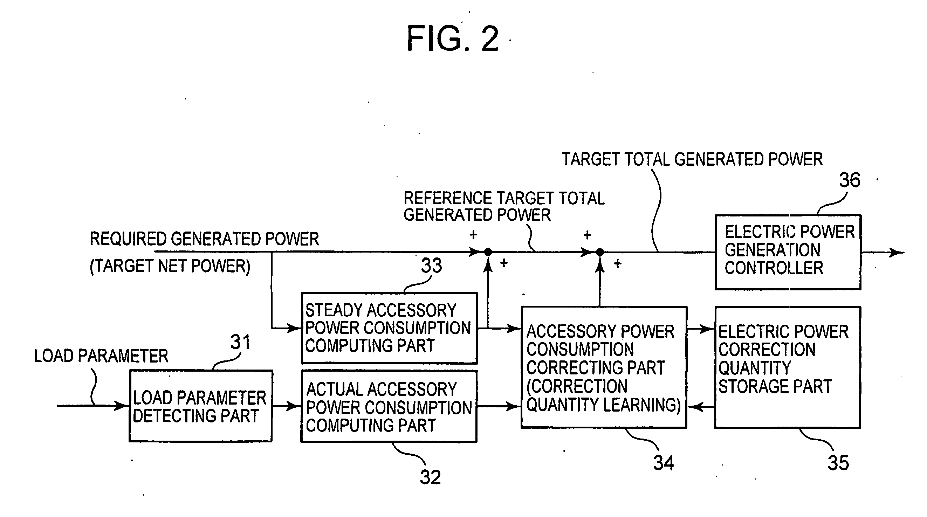

The controller 3 receives the outputs from all of the sensors, and the controller 3 outputs a driving signal to various actuators that drive the compressor 13, the hydrogen purging valve 8, and the other controllable elements of the fuel cell system 1. In particular according to one or more embodiments of the invention, the electric power generation is controlled for fuel cell system 1. An explanation of the construction of controller 3 will be made with reference to Figure 2.

As shown in Figure 2, the controller 3 includes a load parameter detecting part 31 that may be referred to as load parameter detector 31 that detects a load parameter of one or more accessories such as the compressor 13. There is an actual accessory electric power consumption computing part 32 that computes the electric power actually consumed by the accessory based upon the detected load parameter. This may be referred to as an actual accessory power computer 32 and the computed value may be referred to as the actual accessory electric power consumption. There is a steady accessory electric power consumption computing part 33 that computes the electric power consumed by the accessory as needed for generating the electric power generation required from fuel cell system 1. This may be referred to as a steady accessory power computer 33 and the computed value may be referred to as the steady accessory electric power consumption The computation is based upon the steady state characteristics of the accessory for a given steady state performance of the function of the accessory. For example, in the case of a compressor 13 having known or measurable characteristics, the steady state for providing a desired amount of fuel gas to provide a desired level of output electric power generation can be computed. There is an accessory electric power consumption correcting part 34 that corrects the steady accessory electric power consumption based upon computing an electric power correction quantity and combining that electric power correction quantity with the steady accessory electric power consumption. There may be an electric power correction quantity storage part 35 that classifies the electric power correction quantity into load regions based on the electric power generation quantity of fuel cell stack 2 and stores the classified electric power correction quantity into the appropriate load region so that a correction map may be provided. An electric power generation control part 36 is provided that controls the generation of electric power by the fuel cell system 1 based upon the required electric power to be generated, the steady accessory electric power consumption computed for generating the required electric power and corrected by the accessory electric power consumption correcting part 34 based upon the electric power correction quantity stored in the appropriate load region.

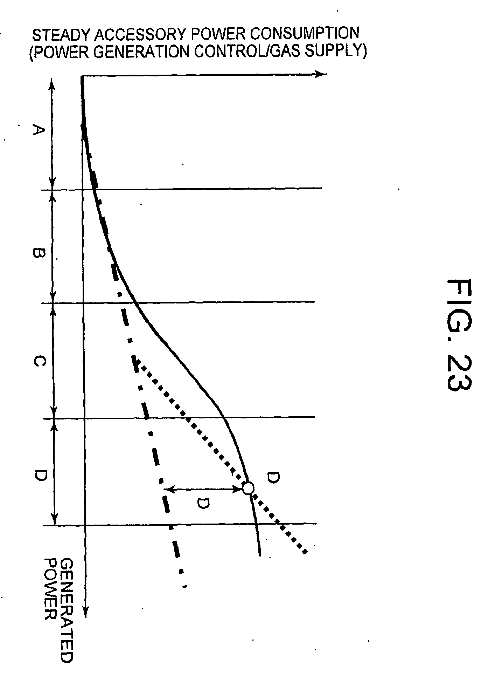

Figure 23 is a diagram illustrating an example of a relationship between the steady accessory electric power consumption and the electric power generation. More specifically, according to one embodiment the classifications of loads and corresponding electric power correction quantities are made into four load regions A-D. The data before correction are indicated by a dot-dash line, the data after correction are indicated by a broken line, and the actual state is indicated by a solid line.

The controller 3 may be composed of the parts described above and may be comprised of a microcomputer having a central processing unit (CPU), random access memory (RAM), read-only memory (ROM), and input/output interface (I/O interface). The controller 3 may also comprise a plural of microcomputers, and it may be formed as a device for executing plural control of the various aspects and processes of the fuel cell system 1, in addition to controlling the electric power generation, as will be explained more fully in the paragraphs that follow.

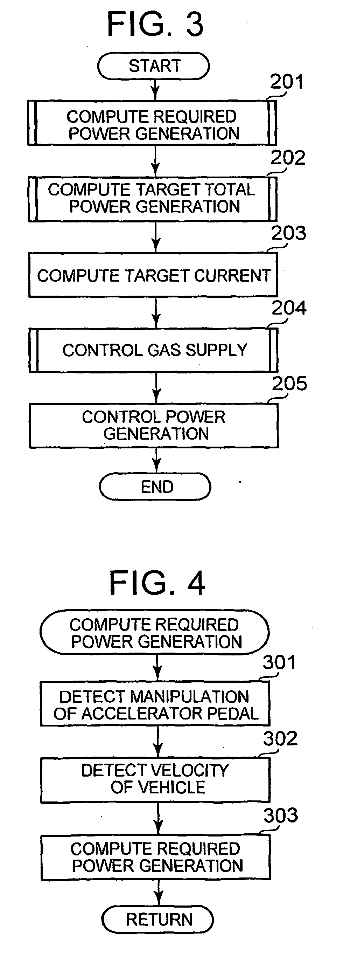

In one embodiment, with reference to Figure 3, an explanation will be given regarding a process of controlling electric power generation by means of the controller 3 In one example the control process is executed for a prescribed time period , for example for a period of about 10 msec.

As shown in Figure 3, the required electric power generation from fuel cell system 1 is computed in a process step 201. A target total electric power generation needed for generating the required electric power from fuel cell stack 2 is computed in a process step 202. In a process step 203, the target electrical current is computed. In a process step 204, the supply of hydrogen gas and air is controlled. In a process step 205, the electric power generation of the fuel cell stack 2 is controlled, and the controlling of electric power generation with controller 3 during the given time period may be ended.

In the following, an explanation will be given in more detail regarding the processing executed in process steps 201-205 shown in Figure 3. With reference to the flow chart shown in Figure 4, an explanation will be provided regarding the process for computing the required electric power generation in process step 201 of Figure 3. The required electric power generation is computed based on the operating state of the electric load connected to fuel cell system 1. For example, an explanation will be provided for the case when fuel cell system 1 of the present embodiment is carried on a hybrid-type electric automobile as an example.

As shown in Figure 4, in process step 301 a manipulation amount of the accelerator pedal by the driver is detected based on the output from an accelerator sensor in the vehicle. In process step 302 the velocity of the vehicle is detected based on the output from a vehicle velocity sensor in the vehicle.

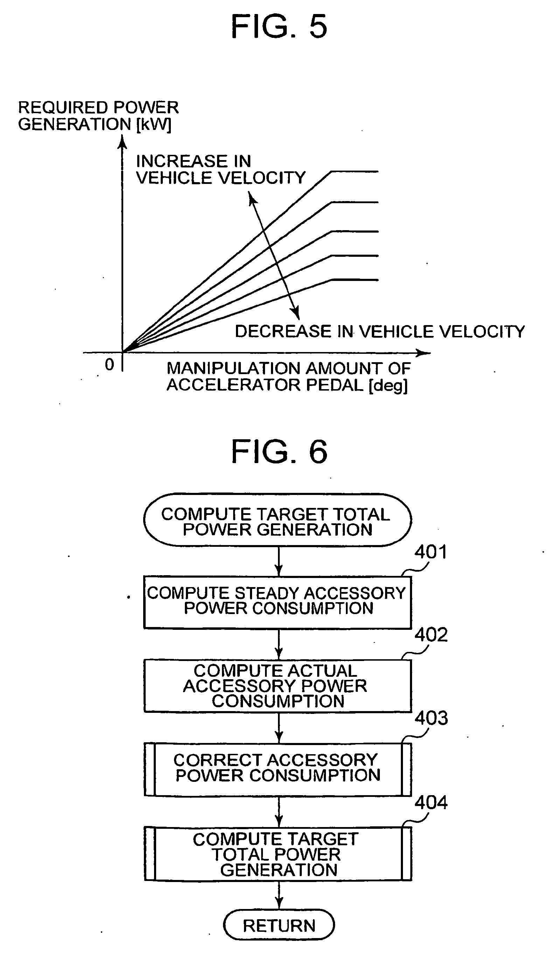

In process step 303, the required generation of power is computed based upon the amount of motion of the accelerator pedal and the vehicle velocity detected in the process steps 301 and 302. The computation maybe made by accessing a map having data as shown as an example in Figure 5. The map data are used to compute the required electric power generation, and the process for computing the required electric power generation comes to an end.

With reference to the flow chart shown in Figure 6, an explanation will be given regarding the process of computing of the target total electric power generation indicated in process step 202 of Figure 3. The target total electric power generation is computed considering the correction quantity determined and applied by the accessory electric power consumption correcting device as being needed for realizing the electric power generation required by the vehicle.

In process step 401, the steady accessory electric power consumption is computed based on steady characteristics determined either theoretically or empirically by testing the actual equipment beforehand.

In process step 402, the electric power actually consumed by the accessory is computed. This value maybe referred to as the actual accessory electric power consumption. The actual accessory electric power consumption is computed by determining the accessory electric power consumption computed from the voltage and current of each accessory. For example in the case of an accessory that is a pump or a compressor, the computed value may by obtained by multiplying the rotation velocity and the torque for the pump, compressor or the like, and by adding the loss in electric power to those values. The loss in electric power may be determined by inputting the rotation velocity and torque to a map of loss data correlated to the detected RPM and Torque for the particular pump or compressor (this may be referred to as a loss data map.)

A low-pass filter may be used to reduce the effect of measurement noise in the voltage, current, rotation velocity and torque of each accessory. Based upon this consideration the detected values after passing through the low-pass filter may be used.

In process step 403, the electric power correction quantity is computed for correcting the steady accessory electric power consumption so that the steady accessory electric power consumption thus corrected approaches the actual accessory electric power consumption.

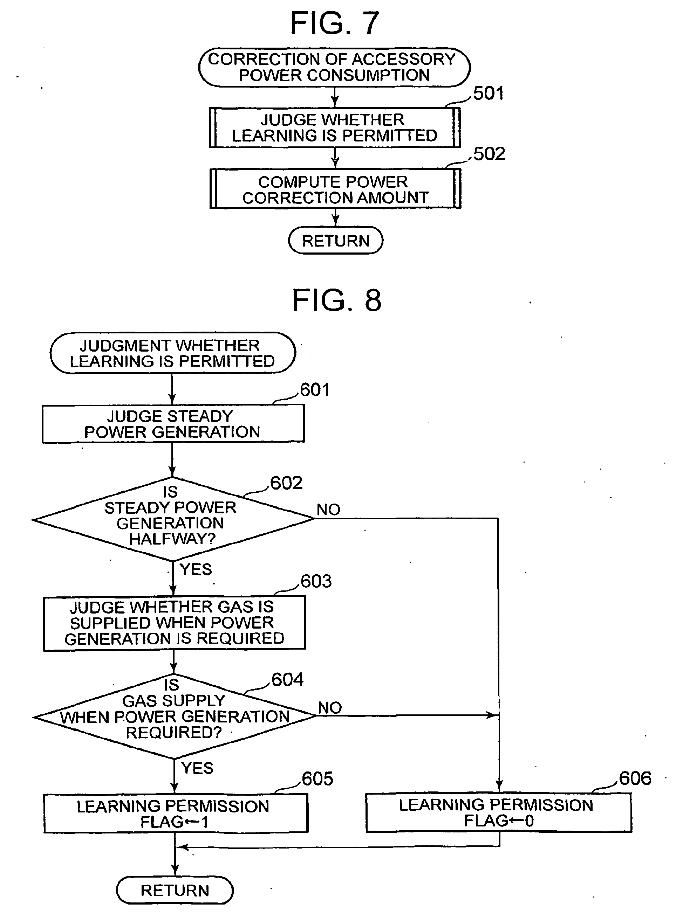

With reference to the flow chart shown in Figure 7, an explanation will be provided for a process for correcting the accessory electric power consumption for computing the electric power correction quantity. In a process step 501, a learning execution permission judgment may be performed by judging whether a learning condition for refreshing the electric power correction quantity is met. In the learning execution permission judgment, refreshing of the electric power correction quantity is prohibited if the learning condition is not met, and the electric power correction quantity is refreshed if the learning condition is met.

The process of the learning execution permission judgment can be explained with reference to the flow chart shown in Figure 8. In process step 601, judgment is made on whether the fuel cell system 1 is in steady electric power generation. As a result, depending on the operating state of the fuel cell system 1, the case where stable measurement cannot be performed is removed.

For the judgment on whether the steady electric power generation exists, a timer is incremented each time the target hydrogen inlet pressure and the target inlet air pressure is smaller than a prescribed value. In this embodiment the operating pressures of fuel cell stack 2 are detected by the hydrogen inlet pressure sensor 12 and the air inlet pressure sensor 16. Thus, if the condition is met that the difference between the target hydrogen inlet pressure and the target air inlet pressure determined in process step 204 is smaller than the prescribed value, the timer is incremented.

When the timer exceeds a prescribed time, it is judged that the fuel cell system 1 is in a state of steady electric power generation. The prescribed value and the prescribed time are set such that a significant difference does not take place between the total electric power generation of fuel cell stack 2 and the actual accessory electric power consumption during steady electric power generation. Also, one may perform the same judgment by using other values, such as gas flow rate, output current draw, operating temperature, and etc., caused by the operating state of fuel cell stack 2.

In process step 602, judgment is made on whether steady electric power generation exists. If it is judged that steady electric power generation is underway, the process goes to process step 603, and judgment is made on whether the gas supply due to the requirement for electric power generation has been executed. Alternatively, if it is judged in process step 602 that a steady electric power generation state does not exist, because the learning condition is not met, the process goes to process step 606, the learning execution permission flag is set at "0," and learning execution permission judgment processing comes to an end..

Alternatively, in process step 603, if all of the parameters for control of the gas supply computed in process step 204 are determined based on the target electrical current determined in process step 203, it is judged that an appropriate quantity of gas (pressure and flow rate) is supplied due to the requirement for electric power generation

The steady accessory electric power consumption is designed based on the gas supply during the requirement for electric power generation, and, when the gas is supplied due to a requirement other than that of electric power generation (such as when supplied corresponding to the condition or state of the power plant instead of the requirement of the vehicle, such as during the start of a power plant, the stop of a power plant, or idle stop), computing of the electric power correction quantity leads to erroneous learning, so that process step 603 is executed.

In process step 604, if it is judged that gas is supplied due to the requirement for electric power generation in process step 603, the process goes to prowess step 605, the learning execution permission flag is set at "1" and learning execution permission judgment processing comes to an end. Alternatively, if it is not judged that gas is supplied due to requirement for electric power generation in process step 603, if the electric power correction quantity is refreshed, erroneous learning takes place, so the process goes to process step 606, the learning execution permission flag is set at "0" and the process of learning execution permission comes to an end.

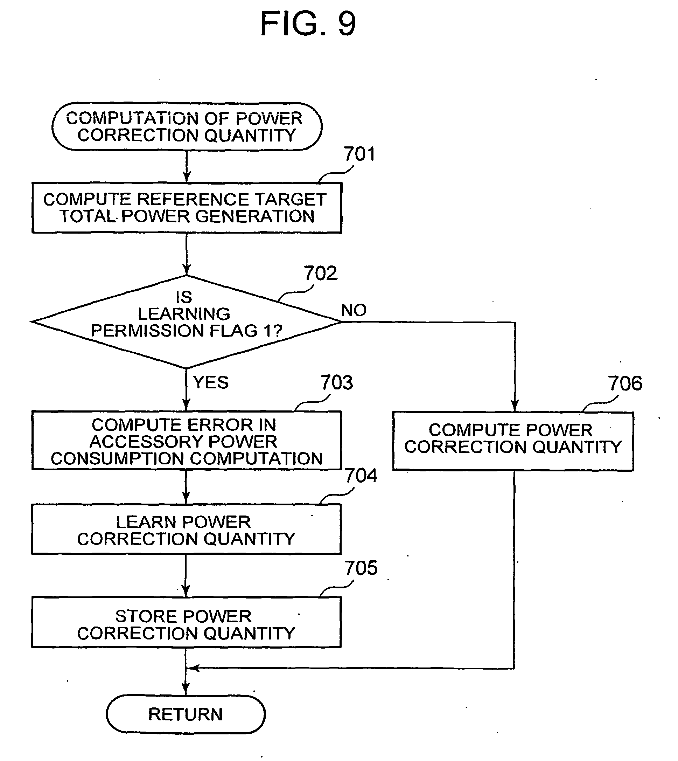

With reference to the flow chart shown in Figure 9, an explanation will be given regarding a process for obtaining the electric power correction quantity referred to previously in process step 502 of Figure 7. As shown in Figure 9, in process step 701, the reference target total electric power generation, as a reference in computing the electric power correction quantity, is computed. The steady accessory electric power consumption computed in process step 401 (Figure 6) is added to the required electric power generation computed in process step 303 (Figure 4) to determine the reference target total electric power generation.

In process step 702, judgment is made on whether the learning execution permission flag determined in process step 501 (Figure 7) is "1." If the learning execution permission flag is "1," the process goes to process step 703 in order to refresh the electric power correction quantity. Alternatively, if the learning execution permission flag is "0," the process goes to process step 706.

If the learning execution permission flag is "1," in process step 703, the difference between the steady accessory electric power consumption computed in process step 401 and the actual accessory electric power consumption computed in process step 402 is determined.

In process step 704, the electric power correction quantity is computed. In the computing of the electric power correction quantity, with the reference target total electric power generation computed in process step 701 taken as an input and with the electric power correction quantity taken as an output, the following linear function learning formula is adopted:

$$\text{Electric power correction quantity (k)} = A(k) * \text{reference target total electric power generation (k)} \dots (1)$$

Wherein:

$$A(k) = \theta(k - 1) + \varepsilon(k) \cdot k;$$

$\theta(k - 1)$ represents an item corresponding to the initial value (the preceding stored electric power correction quantity) corresponding to the reference target total electric power generation computed in process step 701; and

ε(k) represents an item corresponding to the difference between the steady accessory electric power consumption computed in process step S401 and the actual accessory electric power consumption computed in process step 402.

With this learning formula, the electric power correction quantity is computed by refreshing learning parameter A based on the difference between the steady accessory electric power consumption computed in process step 703 and the actual accessory electric power consumption. However, one may also adopt a formula with a higher order than the linear coefficients as formula 1.

With the learning formula, the electric power correction quantity is computed such that while deviation between the steady accessory electric power consumption and the actual accessory electric power consumption is suppressed, the speed for correcting deviation between the steady accessory electric power consumption and the actual accessory electric power consumption is faster (the time is lower) than the speed for controlling fuel cell stack 2.

Also, by taking the reference target total electric power generation as input and the electric power correction quantity as output for the learning formula, it is possible to very precisely simulate the movement of the accessories of fuel cell system 1 driven mainly based on the electric power generation quantity. It is also possible to improve the computing precision with respect to variation in the load.

Also, considering that for learning parameter A, there are characteristics that vary all the time with respect to various variations in characteristics in case of degradation over time and in the process of warming up of the gas of fuel cell system 1, and considering that measurement error is contained in the actual accessory electric power consumption due to the influence of the resolution of the detection sensor, one may for example, adopt the successive least squares method commonly known as the adaptive parameter estimation algorithm adopted in the field of adaptive control. Also, other teaming methods may be adopted as well.

In addition, for computation of the electric power correction quantity, instead of use of the learning formula, one may also adopt integration computing or another method so as to reduce the difference between the steady accessory electric power consumption and the actual accessory electric power consumption.

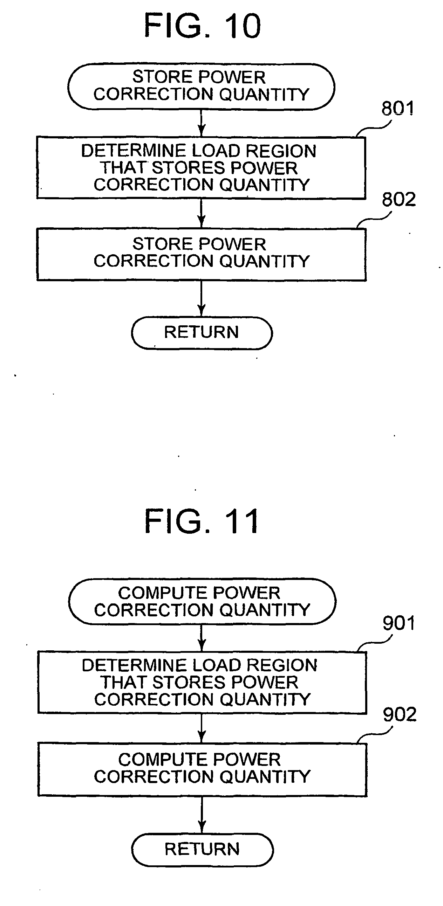

With reference to the flow chart shown in Figure 10, an explanation will be given regarding a process for storing the electric power correction quantity in process step 705 (Figure 9). In process step 801, the load region for storage of the electric power correction quantity (as computed in process step 704) is determined based on the reference target total electric power generation (as computed in process step 701).

In process step 802, the electric power correction quantity (as computed in process step 704) is stored as the electric power correction quantity for the load region determined in process step 801. Also, when the electric power correction quantity is computed using the learning formula in process step 704, it is also possible to store the learning parameter A of the learning formula.

Referring again to the process step 702 of Figure 9, when the learning execution permission flag is not "1," the electric power correction quantity is computed in process step 706 based on the reference target total electric power generation computed from the electric power correction quantity in process step 701 and stored for each load region in process step 705.

With reference to the flow chart shown in Figure 11, an explanation will be given regarding the process for computing the electric power correction quantity. In process step 901, judgment is made on the corresponding load region based on the reference target total electric power generation computed in process step 701 (Figure 9).

In process step 902, in the load region determined in process step 901, the electric power correction quantity is computed based on the electric power correction quantity data stored in process step 705. Instead of the stored electric power correction quantity, one may also linearly interpolate the electric power correction quantity stored in the load region around the reference target total electric power generation.

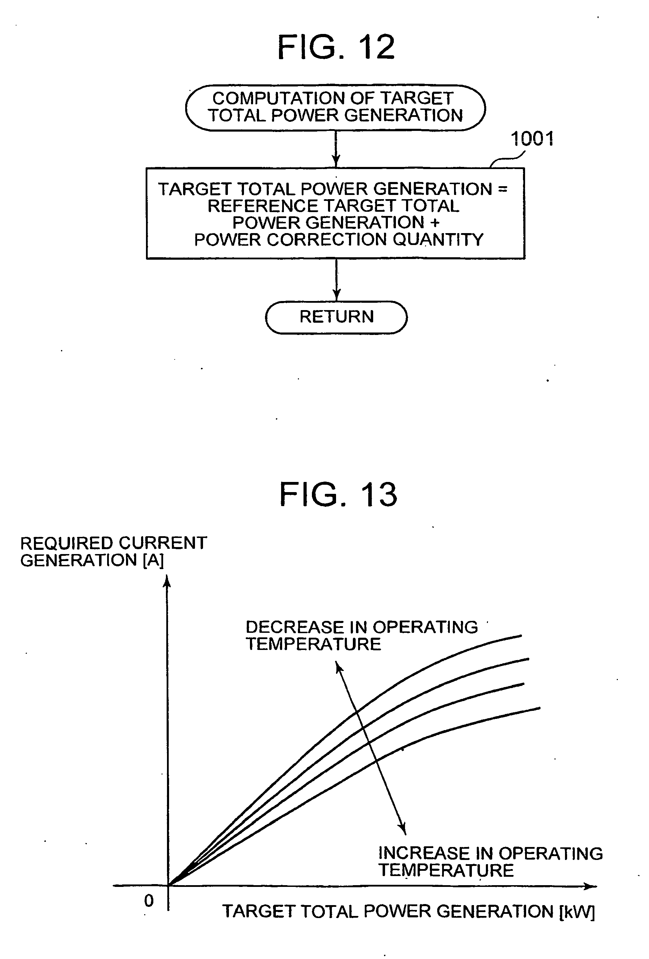

In the following, an explanation will be given regarding processing of computing of the target total electric power generation in process step 404 shown in Figure 6 with reference to the flow chart shown in Figure 12. As shown in Figure 12, in process step 1001, by adding the electric power correction quantity computed in process step 502 to the reference target total electric power generation computed in process step 701, the target total electric power generation is computed, and the processing for computing the target total electric power generation comes to an end, and the process for computing the target total electric power generation shown in Figure 6 comes to an end.

In the following, an explanation will be given regarding the process for computing the target current referred to in process step 203 (Figure 3). The map data shown in Figure 13 are used to compute the target current in the process for computing the target current 203. In this embodiment the computation is based on the target total electric power generation computed in process step 202 and the operating temperature of fuel cell stack 2 detected by coolant temperature sensor 20. The map data shown in Figure 13 are established considering the electric current-voltage characteristics of fuel cell stack 2. One may also use the map data and function that take the target total electric power generation and the electric current-voltage characteristics that vary corresponding to the operating state, such as pressure, temperature, flow rate, and etc., of fuel cell stack 2 as input, and the target electric current as output.

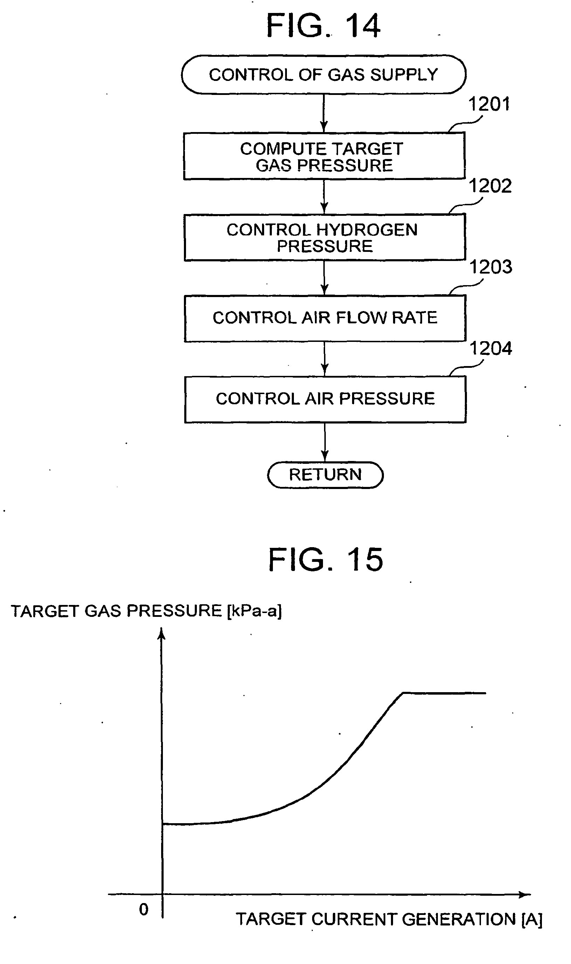

With reference to the flow chart shown in Figure 14, an explanation will be given regarding the process of the controlling the gas supplies of hydrogen and air in process step 204 (Figure 3). In process step 1201, the target gas pressure is computed. The target gas pressure is computed using the table data shown in Figure 15 based on the target electric current computed in the process step 203. The table data are established considering the electric power generation characteristics, efficiency, and etc. of the fuel cell stack 2.

In a process step 1202, the pressure of the hydrogen gas is controlled. Based upon the computed target gas pressure, hydrogen pressure control valve 5 is manipulated, to control the hydrogen pressure at the anode. In this case, manipulation of hydrogen pressure control valve 5 includes determining an instruction signal required for obtaining an appropriate opening position for hydrogen pressure control valve 5 while F/B (feed back) control is performed based on the difference between the hydrogen pressure of fuel cell stack 2 detected by hydrogen inlet pressure sensor 12 and the target gas pressure. Also, in the F/B control, one may adopt another method, such as PI control, model norm type control or other conventional well known schemes. The computed opening instruction signal for hydrogen pressure control valve 5 is sent from controller 3 to the driver of hydrogen pressure control valve 5, and hydrogen pressure control valve 5 is driven accordingly to obtain an appropriate opening position.

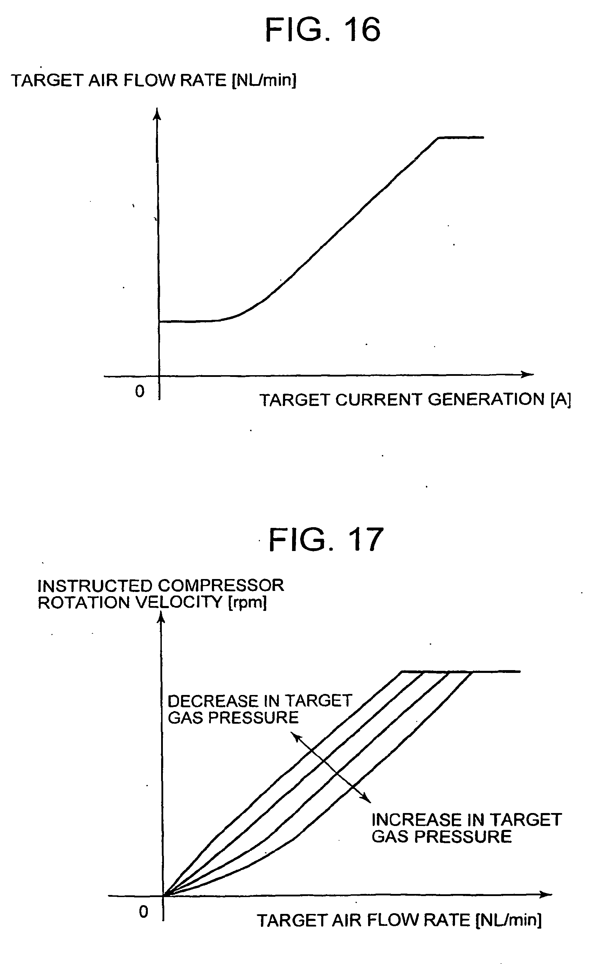

In process step 1203, the flow rate of the air is controlled. The table data shown in Figure 16 are used to compute the target air flow rate based upon the target electric current computed in process step 203. The table data are established such that an air utilization rate is obtained wherein localized insufficiency in the air supply inside the fuel cell does not exist.

Once the target air flow rate is computed, based on the target air flow rate and the target gas pressure, the map data shown in Figure 17 are used to compute a signal representing a desired compressor rotation velocity. The map data are established based on the characteristics of the air flow rate versus the rotation velocity and the pressure ratio of compressor 13. Also, the computed compressor rotation velocity instruction signal is sent from the controller 3 to the compressor driver, and compressor 13 is driven according to the instructed rotation velocity.

In process step 1204, pressure of the air is controlled. The air pressure is controlled by manipulating air pressure control valve 18 based on the target gas pressure computed in process step 1201. Air pressure control valve 18 is manipulated by performing F/B control based on the difference between the air pressure of fuel cell stack 2 detected by air inlet pressure sensor 16 and the target air pressure to determine an instruction signal required for obtaining an appropriate opening position for air pressure control valve 18. Also, the F/B control may be performed instead by using PI control, model norm type control, or another well known conventional method. Also, the valve opening instruction signal for the air pressure control valve 18 computed here is sent from controller 3 to the driver of air pressure control valve 18, and air pressure control valve 18 is driven open according to the valve opening instruction signal.

In the following, an explanation will be given regarding the process for controlling the electric power generation in process step 205. In this process of the controlling the electric power generation, the electric power generation of fuel cell stack 2 is controlled based on the target total electric power generation computed in process step 202. The target total electric power generation is sent from controller 3 to electric power controller 22, the electric power generation of fuel cell stack 2 is controlled, and the process for controlling the electric power generation by controller 3 in the present embodiment comes to an end.

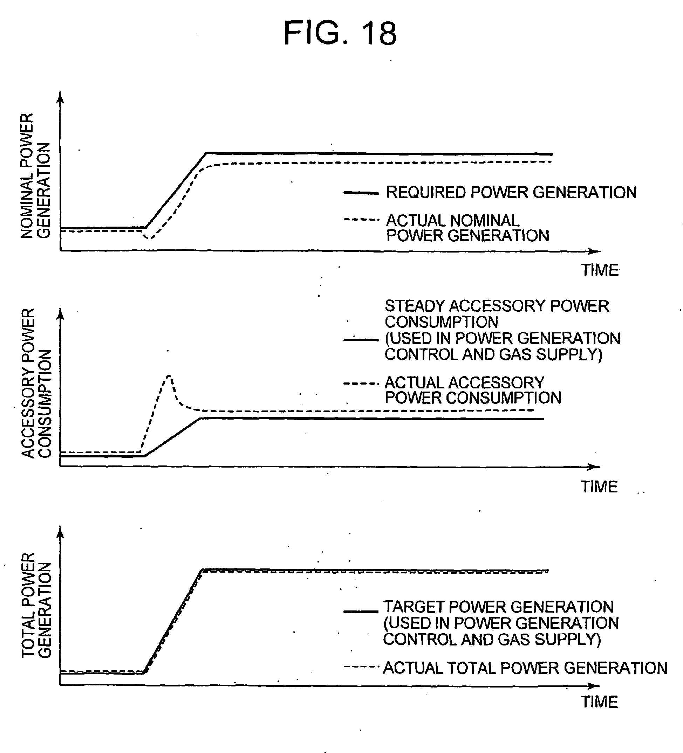

Here, an explanation will be provided for the effect when process for controlling the electric power generation is performed. Figure 18 is a diagram illustrating a time chart for a comparative example. As shown in Figure 18, there may be a variation in the accessory electric power consumption over time. In this example, the steady accessory electric power consumption falls below the actual accessory electric power consumption that is actually consumed by the accessory. This is because as the load increases, the variation due to design error or the like may readily appear. As a result, even with variation of the nominal electric power generation over time, the actual nominal electric power generation that is actually generated by the fuel cell falls below the required electric power generation. Consequently, even if the actual total electric power generation is in agreement with the target electric power generation, the target electric power generation falls below the electric power required by the fuel cell system, so that the required electric power cannot be supplied by the fuel cell system.

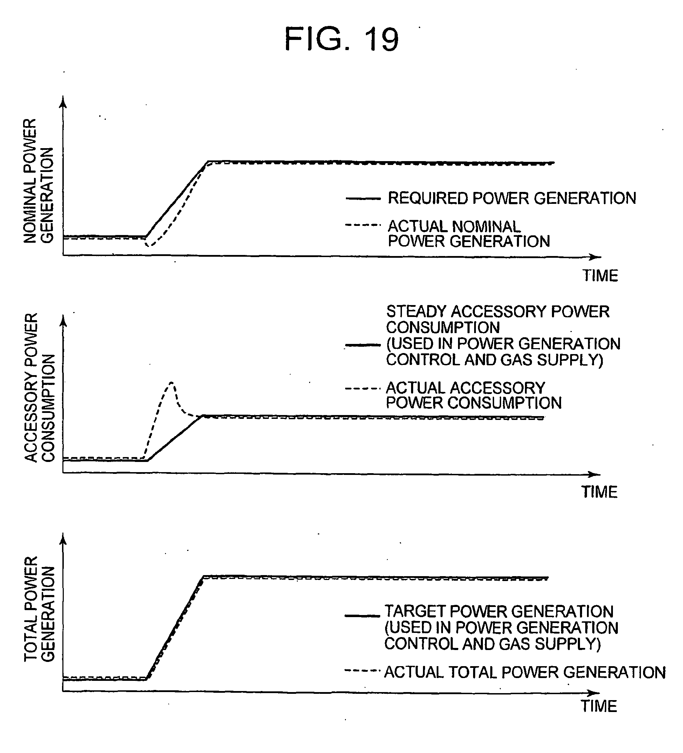

Figure 19 is a diagram illustrating a time chart depicting the process of controlling the electric power generation according to an embodiment of the present invention. As shown in Figure 19, it can be seen that when the process of the control of electric power generation in the present embodiment is performed, the variation over time of the accessory electric power consumption is reduced by adding the electric power correction quantity to the steady accessory electric power consumption for correction, the actual accessory electric power consumption and the steady accessory electric power consumption come into agreement with each other. Also, as a result, even in the variation over time of the nominal electric power generation, the actual nominal electric power generation comes into agreement with the required electric power generation, and the fuel cell system can supply the required electric power.

In this way, with controller 3 of fuel cell system 1 of the present embodiment, the electric power correction quantity is computed such that the steady accessory electric power consumption approaches the actual accessory electric power consumption (D1 in Figure 23). Based on the electric power correction quantity, the steady accessory electric power consumption (D2 in Figure 23) is corrected, and control of the generation of electric power is performed for fuel cell system 1. Consequently, even if the steady characteristics of the accessory electric power consumption change due to degradation over time or the like, or when design error takes place, it is still possible to use an actual load parameter of the accessory to compute the electric power correction quantity to perform correction. As a further result, it is possible to realize high precision of computation of the accessory electric power consumption independent of changes in the system. In addition, it is possible to maintain high precision in realizing the steady nominal electric power generation quantity needed for the fuel cell system, while it is possible to suppress generation of discrepancies between fetching of electric power and of the gas supply.

By means of controller 3 of fuel cell system 1 in the present embodiment, it is possible to suppress deviation between the steady accessory electric power consumption and the actual accessory electric power consumption. In addition, the electric power correction quantity is computed such that the speed in suppressing deviation between the steady accessory electric power consumption and the actual accessory electric power consumption is faster (the time is lower) than the speed of the controlling the fuel cell system 1. As a result, it is possible to reduce the deviation between the steady accessory electric power consumption and the actual accessory electric power consumption. In addition, when said deviation is suppressed, the speed in reaching the target value is controlled to be lower. As a result, it is possible to prevent the occurrence of positive feedback, and it is possible to maintain high precision of computation of the electric power consumed by the accessory without interference in control of the electric power generation.

In addition, by means of controller 3 of fuel cell system 1 in the present embodiment, the steady accessory electric power consumption used in controlling of the electric power drawn from the fuel cell stack 2 is corrected. Consequently, even if the steady characteristics of the accessory electric power consumption vary due to degradation over time or if there is a design error, it is still possible to use an actual load parameter of the accessory to perform correction, and it is possible to realize high computing precision of the accessory electric power consumption independent of changes in the system. In addition, it is possible to maintain high precision in realizing a steady nominal electric power generation quantity in fuel cell system 1.

Also, by means of controller 3 of fuel cell system 1 in the present embodiment, the steady accessory electric power consumption used in control of drawing of electric power of the fuel cell stack 2 and the steady accessory electric power consumption used in the gas control of fuel cell stack 2 are controlled. Consequently, even if the steady characteristics of the accessory, electric power consumption vary due to degradation over time or if there is a design error, it is still possible to use an actual load parameter of the accessory to compute the electric power correction quantity to perform correction, and it is possible to realize high computing precision of the accessory electric power consumption independent of changes in the system. In addition, it is possible to maintain high precision in realizing a steady nominal electric power generation quantity in fuel cell system 1, while it is possible to suppress discrepancy between the drawing of electric power and the gas supply.

In addition, by means of controller 3 of fuel cell system 1 in the present embodiment, the electric power correction quantity is computed based on a learning formula that takes the total electric power generation of fuel cell stack 2 including the accessory electric power consumption as input, and the electric power correction quantity is determined by refreshing the coefficients of the learning formula. As a result, it is possible to simulate, at high precision, movement of the accessories of fuel cell system 1 driven mainly based on the electric power generation. As a result, it is possible to improve the computing precision with respect to variation in the load. For example, even if variation in the load takes place frequently due to the operating state of the vehicle, quick correction is still possible.

Also, by means of controller 3 of fuel cell system 1 in the present embodiment, based on the electric powder generation quantity of fuel cell stack 2, the electric power correction quantity is classified into load regions (as shown in Figure 23, classification is made into four load regions A-D), and the corresponding electric power correction quantity is stored for each of the load region. Consequently, even if the steady characteristics of the accessory electric power consumption undergo complicated variation with respect to the initial state due to degradation over time, learning of the steady characteristics at high precision is possible.

In addition, by means of controller 3 of fuel cell system 1 in the present embodiment, the learning condition for refreshing the electric power correction quantity is preset. Refreshing of the electric power correction quantity is prohibited when the learning condition is not met. The electric power correction quantity is refreshed when the learning condition is met. As a result, it is possible to prevent erroneous learning of the electric power correction quantity.

Also, for controller 3 of fuel cell system 1 in the present embodiment, the learning condition is that fuel cell system 1 is in a steady electric power generation state. Consequently, it is possible to prevent erroneous learning during transitioning variation of the total electric power generation quantity of fuel cell system 1 and the accessory electric power consumption.

In addition, for controller 3 of fuel cell system 1 in the present embodiment, the learning condition is that gas is supplied to fuel cell stack 2 based on the requirement for electric power generation. Consequently, it is possible to prevent erroneous learning in the state of gas control based on the accessory electric power consumption.

Also, in the present embodiment, both the steady accessory electric power consumption used in control of fetching of electric power of fuel cell stack 2 and the steady accessory electric power consumption used in gas control for fuel cell stack 2 are corrected. As a result, one may correct either of the steady accessory electric power consumption used in controlling the electric power drawn from the fuel cell and the steady accessory electric power consumption used in gas control.

Also, in the present embodiment, the steady accessory electric power consumption is corrected. However, it is also possible to correct the steady characteristics in the steady accessory electric power consumption computing part.

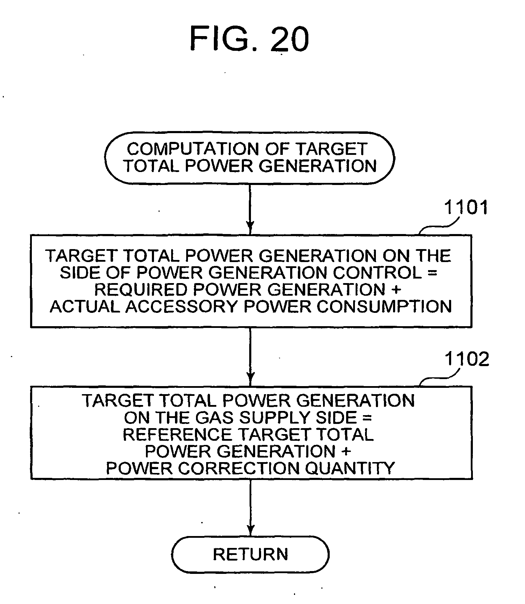

With reference to Figures 20-23, an explanation of one or more alternative embodiments of the present invention will be given. Figure 20 is a flow chart illustrating a process of the computing of the target total electric power generation in a fuel cell system. Since the basic construction of the fuel cell system in this embodiment is identical, or at least similar, to that described in one or more other embodiments, a detailed explanation will not be repeated.

In one or more previously explained embodiments, for example as explained with reference to the flow chart shown in Figure 12, the target total electric power generation is determined by adding the electric power correction quantity to the reference total electric power generation. Consequently, the target total electric power generation used in controlling the drawing of electric power from the fuel cell stack 2 becomes the same value as the target total electric power generation used in gas control. In the alternative the target total electric power generation for controlling the drawing of electric power and the target total electric power generation for gas control may be computed separately.

As shown in Figure 20, in a process step 1101 of the process of computing of the target total electric power generation, the actual accessory electric power consumption computed in process step 402 is added to the required electric power generation computed in process step 201, so that the target total electric power generation for control of the electric power generation executed in process step 205 is computed.

At process step 1102, by adding the electric power correction quantity computed in process step 502 to the reference total electric power generation computed in process step 701, the target total electric power generation for use in controlling the gas supply executed in process step 204 is computed, and the process of computation of the target total electric power generation is completed.

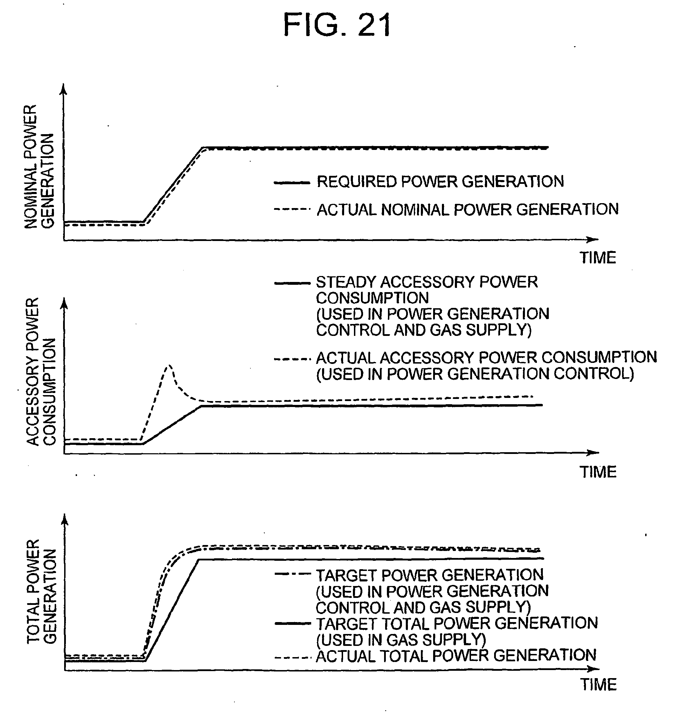

An explanation will be given regarding the effect of the process of computing the target total electric power generation. Figure 21 shows a time chart of a comparative example. As shown, there is a variation over time in the accessory electric power consumption. The steady accessory electric power consumption falls below the actual accessory electric power consumption. Also, in the variation over time of the nominal electric power generation, the required electric power generation and the actual nominal electric power generation are in agreement with each other. This is because the required electric power generation is determined based on the actual accessory electric power consumption. Also, in the variation over time of the total electric power generation, the target total electric power generation used in controlling the electric power generation reaches the actual total electric power generation. This is because the target total electric power generation is determined based on the actual accessory electric power consumption. However, the target total electric power generation used in controlling the gas supply does not reach the target total electric power generation. This is because the target total electric power generation is determined based on the steady accessory electric power consumption. Consequently, the gas supply becomes insufficient with respect to the actual total electric power generation, and, since the gas supply is insufficient, the performance of the fuel cell stack degrades.

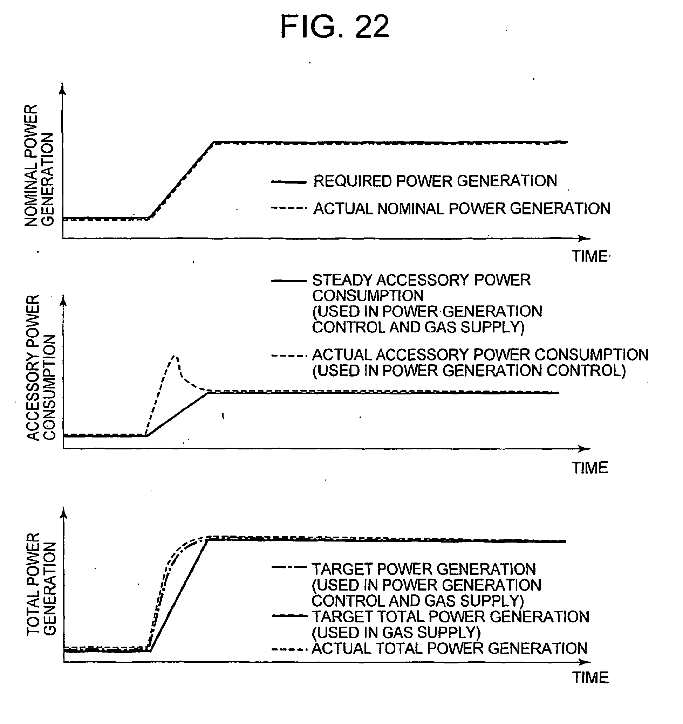

Figure 22 shows an example time chart for a process of computing of the target total electric power generation in the present embodiment. As shown in Figure 22, in the process of computing of the target total electric power generation according to an embodiment of the present embodiment, it is found that by adding the electric power correction quantity to the steady accessory electric power consumption for correction the variation over time of the accessory electric power consumption is reduced or eliminated The actual accessory electric power consumption and the steady accessory electric power consumption are in agreement with each other over the time period of power generation. As a result, it can be seen that in the variation over time of the total electric power generation, the actual total electric power generation is reached not only for the target total electric power generation used in controlling the electric power generation, but also for the target total electric power generation used in controlling the gas supply.

In this way, with controller 3 of the fuel cell system in the present embodiment, the steady accessory electric power consumption used in gas control of fuel cell stack 2 is corrected. As a result, even if the steady characteristics of the accessory electric power consumption change due to degradation over time or the like or when design error takes place, it is still possible to use an actual load parameter of the accessory to perform correction. As a further result, it is possible to realize high precision of computing of the accessory electric power consumption independent of changes in the system. In addition, it is possible to maintain high precision in realizing the steady nominal electric power generation quantity needed for the fuel cell system, while it is possible to suppress generation of discrepancy between the drawing of electric power and the supplying of gas.

In the above, an explanation was provided for embodiments illustrated by figures. However, the present invention is not limited to these schemes. For example, one may also adopt another construction for the fuel cell having the same or equivalent functions for the various parts. Thus, while the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

**Claims**

1. A fuel cell system (1) of a type that uses an accessory (13) to supply fuel gas and oxidant gas to a fuel cell (2) to generate electric power, the fuel cell system (1) comprising:

   a load parameter detection means (31) for detecting a load parameter of the accessory (13),
   an actual accessory power computing means (32) for computing an electric power actually consumed by the accessory (13) based on the detected load parameter,
   a steady accessory power computing means (33) for computing a steady accessory electric power consumption by the accessory (13) that would be needed for supplying the fuel cell gas to generate an amount of required electric power from the fuel cell system (1) based on the steady electric power consumption characteristics of the accessory (13),
   an accessory power correcting means (34) for computing an electric power correction quantity such that the electric power correction quantity is combined with the steady accessory power to approach the actual accessory electric power consumption, and for correcting the steady accessory electric power consumption based on the electric power correction quantity, and
   a power generation controlling means (36) for controlling the power generation of the fuel cell system based upon the required electric power to be generated by the fuel cell system (1) and upon the computed steady accessory electric power consumption corrected by the accessory power correcting means (34).

2. The fuel cell system (1) of Claim 1, wherein the accessory power correcting means (34) suppresses deviation between the steady accessory electric power consumption and the actual accessory electric power consumption, and, at the same time, computes the electric power correction quantity such that the speed in suppressing deviation between said steady accessory electric power consumption and actual accessory electric power consumption is faster than the speed in controlling said fuel cell system (1).

3. The fuel cell system (1) of Claim 1, wherein the accessory power correcting means (34) corrects the steady accessory electric power consumption used in controlling the drawing of electric power from the fuel cell (2) or used in gas control for the fuel cell (2) or used in controlling the gas supply for the fuel cell (2).

4. The fuel cell system (1) of Claim 1, wherein the accessory power correcting means (34) computes the electric power correction quantity based on a learning formula that takes the total electric power generation containing the accessory electric power consumption as input, and determines the electric power correction quantity by refreshing the coefficients of the learning formula.

5. The fuel cell system (1) of Claim 1, comprising an electric power correction quantity storage means (35) that classifies the electric power correction quantity into load regions based on the electric power generation of the fuel cell and stores correspondingly classified electric power correction quantities in the corresponding classified load regions.

6. The fuel cell system (1) of Claim 1, wherein the accessory power correcting means (34) has a preset the learning condition for refreshing the electric power correction quantity, prohibits refreshing of the electric power correction quantity when the preset learning condition is not met, and refreshes the electric power correction quantity when the preset learning condition is met.

7. The fuel cell system (1) of Claim 6, wherein the preset learning condition comprises a requirement :

   that the fuel cell system (1) is in a state of steady electric power generation; or
   that gas is supplied to the fuel cell (2) based on the requirement for electric power generation.

8. A method for controlling a fuel cell system (1) of the type that uses an accessory (13) to supply fuel gas and oxidant gas to a fuel cell (2), comprising:

   detecting a load parameter of the accessory (13),

computing an actual accessory electric power consumption;
computing a steady accessory electric power consumption needed for generating the electric power generation required from the fuel cell system based on the steady characteristics of the accessory (13), correcting the accessory electric power consumption by computing an electric power correction quantity such that the steady accessory electric power consumption will approach the actual accessory electric power consumption and correcting steady accessory electric power consumption based on the electric power correction quantity, and
controlling the power generation of the fuel cell system (1) based on a required electric power generation and the corrected steady accessory electric power consumption obtained by correcting the accessory electric power consumption based upon the electric power correction quantity.

9. The method for controlling the fuel cell system (1) of Claim 8, wherein the speed of correcting the accessory electric power consumption and thereby suppressing deviation between said steady accessory electric power consumption and actual accessory electric power consumption is faster than the speed of controlling the fuel cell system (1).

10. The method for controlling the fuel cell system (1) of Claim 8, wherein controlling the power generation of the fuel cell (2) based upon the corrected steady accessory electric power consumption comprises using the corrected steady accessory electric power consumption in controlling of drawing of the electric power from the fuel cell (2) and/or controlling of gas supplied to the fuel cell (2).

11. The method for controlling the fuel cell system (1) of Claim 8, wherein the correcting of the steady accessory electric power consumption, comprises computing the electric power correction quantity based on a learning formula that takes the total electric power generation containing the accessory electric power consumption as input, and determining the electric power correction quantity by refreshing the coefficients of the learning formula.

12. The method for controlling the fuel cell system (1) of Claim 8, wherein an electric power correction quantity storage process step is also included that classifies the electric power correction quantity into load regions based on the electric power generation of said fuel cell and stores the electric power correction quantity for each said load region.

13. The method for controlling the fuel cell system (1) of Claim 8, wherein correcting the steady accessory electric power consumption comprises:

presetting a learning condition for refreshing the electric power correction quantity;
prohibiting refreshing of the electric power correction quantity when the preset learning condition is not met, and permitting refreshing of the electric power correction quantity when the preset learning condition is met.

14. The method for controlling the fuel cell system (1) of Claim 13, wherein the preset learning condition is:

that the fuel cell system (1) is in a state of steady electric power generation; and/or
that gas is supplied to the fuel cell (2) based on the requirement for electric power generation.

**Patentansprüche**

1. Brennstoffzellensystem (1) von einer Art, die eine Hilfseinrichtung (13) verwendet, um einer Brennstoffzelle (2) Brenngas und Oxidationsmittelgas zum Erzeugen von elektrischer Leistung zuzuführen, wobei das Brennstoffzellensystem (1) folgendes umfasst:

ein Lastparameter-Erfassungsmittel (31) zum Erfassen eines Lastparameters der Hilfseinrichtung (13),
ein Berechnungsmittel (32) für die tatsächliche Leistung der Hilfseinrichtung, um auf der Grundlage des erfassten Lastparameters eine tatsächlich durch die Hilfseinrichtung (13) aufgenommene elektrische Leistung zu berechnen,
ein Berechnungsmittel (33) für die Dauerleistung der Hilfseinrichtung, um eine elektrische Dauerleistungsaufnahme der Hilfseinrichtung durch die Hilfseinrichtung (13) zu berechnen, die benötigt würde, um das Brennstoffzellengas zuzuführen, um auf der Grundlage der Charakteristika der elektrischen Dauerleistungsaufnahme der Hilfseinrichtung (13) ein Maß an erforderlicher elektrischer Leistung aus dem Brennstoffzellensystem (1) zu erzeugen,
ein Leistungskorrekturmittel (34) für die Hilfseinrichtung zum Berechnen einer Korrekturmenge der elektrischen Leistung derart, dass die Korrekturmenge der elektrischen Leistung mit der Dauerleistung der Hilfseinrichtung kombiniert wird, um sich der tatsächlichen elektrischen Leistungsaufnahme der Hilfseinrichtung zu nähern und um die elektrische Dauerleistungsaufnahme der Hilfseinrichtung auf der Grundlage der Korrekturmenge der elektrischen Leistung zu korrigieren, und

ein Leistungserzeugungsregelungsmittel (36) zum Regeln der Leistungserzeugung des Brennstoffzellensystems auf der Grundlage der durch das Brennstoffzellensystem (1) zu erzeugenden erforderlichen elektrischen Leistung und der berechneten elektrischen Dauerleistungsaufnahme der Hilfseinrichtung, korrigiert durch das Leistungskorrekturmittel (34) für die Hilfseinrichtung.

2. Brennstoffzellensystem (1) gemäß Anspruch 1, wobei das Leistungskorrekturmittel (34) für die Hilfseinrichtung eine Abweichung zwischen der elektrischen Dauerleistungsaufnahme der Hilfseinrichtung und der tatsächlichen elektrischen Leistungsaufnahme der Hilfseinrichtung unterdrückt und, zur gleichen Zeit, die Korrekturmenge der elektrischen Leistung berechnet derart, dass die Geschwindigkeit beim Unterdrücken einer Abweichung zwischen der elektrischen Dauerleistungsaufnahme der Hilfseinrichtung und der tatsächlichen elektrischen Leistungsaufnahme der Hilfseinrichtung schneller ist als die Geschwindigkeit beim Regeln des Brennstoffzellensystems (1).

3. Brennstoffzellensystem (1) gemäß Anspruch 1, wobei das Leistungskorrekturmittel (34) für die Hilfseinrichtung die elektrische Dauerleistungsaufnahme der Hilfseinrichtung korrigiert, die beim Regeln der Entnahme von elektrischer Leistung aus der Brennstoffzelle (2) verwender wird oder bei der Gasregelung für die Brennstoffzelle (2) verwendet wird oder beim Regeln der Gaszufuhr für die Brennstoffzelle (2) verwender wird.

4. Brennstoffzellensystem (1) gemäß Anspruch 1, wobei das Leistungskorrekturmittel (34) für die Hilfseinrichtung die Korrekturmenge der elektrischen Leistung auf der Grundlage einer Lernformel berechnet, welche die Gesamterzeugung von elektrischer Leistung, welche die elektrische Leistungsaufnahme der Hilfseinrichtung enthält, als Eingabe nimmt und die Korrekturmenge der elektrischen Leistung durch das Aktualisieren der Koeffizienten der Lernformel bestimmt.

5. Brennstoffzellensystem (1) gemäß Anspruch 1, das ein Speichermittel (35) für die Korrekturmenge der elektrischen Leistung umfasst, das die Korrekturmenge der elektrischen Leistung auf der Grundlage der elektrischen Leistungserzeugung der Brennstoffzelle in Lastbereiche klassifiziert und die entsprechend klassifizierten Korrekturmengen der elektrischen Leistung in den entsprechenden klassifizierten Lastbereichen speichert.

6. Brennstoffzellensystem (1) gemäß Anspruch 1, wobei das Leistungskorrekturmittel (34) für die Hilfseinrichtung eine Vorbestimmte Lernbedingung für das Aktualisieren der Korrekturmenge der elektrischen Leistung hat, das Aktualisieren der Korrekturmenge der elektrischen Leistung unterbindet, wenn die Vorbestimmte Lernbedingung nicht erfüllt ist, und die Korrekturmenge der elektrischen Leistung aktualisiert, wenn die Vorbestimmte Lernbedingung erfüllt ist.

7. Brennstoffzellensystem (1) gemäß Anspruch 6, wobei die Vorbestimmte Lernbedingung ein Erfordernis umfasst, dass sich das Brennstoffzellensystem (1) in einem Zustand einer stetigen Erzeugung von elektrischer Leistung befindet oder
dass der Brennstoffzelle (2) auf der Grundlage des Erfordernisses für die Erzeugung von elektrischer Leistung Gas zugeführt wird.

8. Verfahren zum Regeln eines Brennstoffzellensystems (1) von der Art, die eine Hilfseinrichtung (13) verwender, um einer Brennstoffzelle (2) Brennstoffgas und Oxidationsmittelgas, wobei das Verfahren Folgendes umfasst:

das Erfassen eines Lastparameters der Hilfseinrichtung (13),
das Berechnen einer tatsächlichen elektrischen Leistungsaufnahme der Hilfseinrichtung,
das Berechnen einer elektrischen Dauerleistungsaufnahme der Hilfseinrichtung, die erforderlich ist, um die von dem Brennstoffzellensystem benötigte elektrische Leistungserzeugung zu erzeugen, auf der Grundlage der Dauercharakteristika der Hilfseinrichtung (13),
das Korrigieren der elektrischen Leistungsaufnahme der Hilfseinrichtung durch das Berechnen einer Korrekturmenge der elektrischen Leistung derart, dass sich die elektrische Dauerleistungsaufnahme der Hilfseinrichtung der tatsächlichen elektrischen Leistungsaufnahme der Hilfseinrichtung nähern wird, und das Korrigieren der elektrischen Dauerleistungsaufnahme der Hilfseinrichtung auf der Grundlage der Korrekturmenge der elektrischen Leistung, und
das Regeln der Leistungserzeugung des Brennstoffzellensystems (1) auf der Grundlage der erforderlichen elektrischen Leistungserzeugung und der korrigierten elektrischen Dauerleistungsaufnahme der Hilfseinrichtung, gewonnen durch das Korrigieren der elektrischen Leistungsaufnahme der Hilfseinrichtung auf der Grundlage der Korrekturmenge der elektrischen Leistung.

9. Verfahren zum Regeln des Brennstoffzellensystems (1) gemäß Anspruch 8, wobei die Geschwindigkeit des Korrigierens der elektrischen Leistungsaufnahme der Hilfseinrichtung und dadurch des Unterdrückens einer Abweichung zwischen der elektrischen Dauerleistungsaufnahme der Hilfseinrichtung und der tatsächlichen elektrischen Leistungsaufnahme der Hilfseinrichtung schneller ist als die Geschwindigkeit des Regelns des Brennstoffzellensystems (1).

10. Verfahren zum Regeln des Brennstoffzellensystems (1) gemäß Anspruch 8, wobei das Regeln der Leistungserzeugung der Brennstoffzelle (2) auf der Grundlage der korrigierten elektrischen Dauerleistungsaufnahme der Hilfseinrichtung das Versenden der korrigierten elektrischen Dauerleistungsaufnahme der Hilfseinrichtung beim Regeln der Entnahme von elektrischer Leistung aus der Brennstoffzelle (2) und/oder beim Regeln des der Brennstoffzelle (2) zugeführten Gases umfasst.

11. Verfahren zum Regeln des Brennstoffzellensystems (1) gemäß Anspruch 8, wobei das Korrigieren der elektrischen Dauerleistungsaufnahme der Hilfseinrichtung das Berechnen der Korrekturmenge der elektrischen Leistung auf der Grundlage einer Lernformel umfasst, welche die Gesamterzeugung von elektrischer Leistung, welche die elektrische Leistungsaufnahme der Hilfseinrichtung enthält, als Eingabe nimmt und die Korrekturmenge der elektrischen Leistung durch das Aktualisieren der Koeffizienten der Lernformel bestimmt.

12. Verfahren zum Regeln des Brennstoffzellensystems (1) gemäß Anspruch 8, wobei ebenfalls ein Speicherungsschritt für die Korrekturmenge der elektrischen Leistung eingeschlossen ist, der die Korrekturmenge der elektrischen Leistung auf der Grundlage der elektrischen Leistungserzeugung der Brennstoffzelle in Lastbereiche klassifiziert und die Korrekturmengen der elektrischen Leistung für jeden Lastbereich speichert.

13. Verfahren zum Regeln des Brennstoffzellensystems (1) gemäß Anspruch 8, wobei das Korrigieren der elektrischen Dauerleistungsaufnahme der Hilfseinrichtung Folgendes umfasst:

das Vorbestimmen einer Lernbedingung für das Aktualisieren der Korrekturmenge der elektrischen Leistung,
das Unterbinden des Aktualisierens der Korrekturmenge der elektrischen Leistung, wenn die Vorbestimmte Lernbedingung nicht erfüllt ist, und
das Ermöglichen des Aktualisierens der Korrekturmenge der elektrischen Leistung aktualisiert, wenn die Vorbestimmte Lernbedingung erfüllt ist.

14. Verfahren zum Regeln des Brennstoffzellensystems (1) gemäß Anspruch 13, wobei die Vorbestimmte Lernbedingung folgendes ist:

dass sich das Brennstoffzellensystem (1) in einem Zustand einer stetigen Erzeugung von elektrischer Leistung befindet oder
dass der Brennstoffzelle (2) auf der Grundlage des Erfordernisses für die Erzeugung von elektrischer Leistung Gas zugeführt wird.

## Revendications

1. Système de cellule à combustible (1) d'un type qui utilise un accessoire (13) pour alimenter du gaz combustible et du gaz oxydant dans une cellule à combustible (2) pour générer une puissance électrique, le système de cellule à combustible (1) comprenant :

un moyen de détection de paramètre de charge (31) pour détecter un paramètre de charge de l'accessoire (13),
un moyen de calcul de puissance d'accessoire effective (32) pour calculer une puissance électrique effectivement consommée par l'accessoire (13) sur la base du paramètre de charge détecté,
un moyen de calcul de puissance d'accessoire stable (33) pour calculer une consommation de puissance électrique d'accessoire stable par l'accessoire (13) qui serait requise pour alimenter le gaz de cellule à combustible pour générer une quantité de puissance électrique requise à partir du système de cellule à combustible (1) sur la base des caractéristiques de consommation de puissance électrique stable de l'accessoire (13),

un moyen de correction de puissance accessoire (34) pour calculer une quantité de correction de puissance électrique de sorte que la quantité de correction de puissance électrique soit combinée avec la puissance d'accessoire stable pour approcher la consommation de puissance électrique d'accessoire effective, et pour corriger la consommation de puissance électrique d'accessoire stable sur la base de la quantité de correction de puissance électrique, et

un moyen de commande de génération de puissance (36) pour commander la génération de puissance du système de cellule à combustible sur la base de la puissance électrique requise à générer par le système de cellule à combustible (1) et de la consommation de puissance électrique d'accessoire stable calculée corrigée par le moyen de correction de puissance d'accessoire (34).

2. Système de cellule à combustible (1) selon la revendication 1, dans lequel le moyen de correction de puissance d'accessoire (34) supprime la déviation entre la consommation de puissance électrique d'accessoire stable et la consommation de puissance électrique d'accessoire effective, et, en même temps, calcule la quantité de correction de puissance électrique de sorte que la vitesse de suppression de déviation entre ladite consommation de puissance électrique d'accessoire stable et la consommation de puissance électrique d'accessoire effective soit plus rapide que la vitesse de commande dudit système de cellule à combustible (1).

3. Système de cellule à combustible (1) selon la revendication 1, dans lequel le moyen de correction de puissance d'accessoire (34) corrige la consommation de puissance électrique d'accessoire stable utilisée pour commander l'extraction de puissance électrique de la cellule à combustible (2) ou utilisée pour commander le gaz pour la cellule à combustible (2) ou utilisée pour commander l'alimentation en gaz pour la cellule à combustible (2).

4. Système de cellule à combustible (1) selon la revendication 1, dans lequel le moyen de correction de puissance d'accessoire (34) calcule la quantité de correction de puissance électrique sur la base d'un formule d'apprentissage qui prend comme entrée la génération de puissance électrique totale contenant la consommation de puissance électrique d'accessoire, et détermine la quantité de correction de puissance électrique en rafraîchissant les coefficients de la formule d'apprentissage.

5. Système de cellule à combustible (1) selon la revendication 1, comprenant un moyen de mémorisation de quantité de correction de puissance électrique (35) qui classifie la quantité de correction de puissance électrique en régions de charge sur la base de la génération de puissance électrique de la cellule à combustible et mémorise des quantités de correction de puissance électrique classifiées de manière correspondante dans les régions de charge classifiées correspondantes.

6. Système de cellule à combustible (1) selon la revendication 1, dans lequel le moyen de correction de puissance d'accessoire (34) a une condition d'apprentissage préréglée pour rafraîchir la quantité de correction de puissance électrique, empêche le rafraîchissement de la quantité de correction de puissance électrique quand la condition d'apprentissage préréglée n'est pas satisfaite, et rafraîchit la quantité de correction de puissance électrique quand la condition d'apprentissage préréglée est satisfaite.

7. Système de cellule à combustible (1) selon la revendication 6, dans lequel la condition d'apprentissage préréglée comprend une exigence :

que le système de cellule à combustible (1) soit dans un état de génération de puissance électrique stable ; ou
que le gaz soit alimenté dans la cellule à combustible (2) sur la base de l'exigence de génération de puissance électrique.

8. Méthode pour commander un système de cellule à combustible (1) du type qui utilise un accessoire (13) pour alimenter du gaz combustible et du gaz oxydant dans une cellule à combustible (2), comprenant :

détecter un paramètre de charge de l'accessoire (13),
calculer une consommation de puissance électrique d'accessoire effective;
calculer une consommation de puissance électrique d'accessoire stable requise pour générer la génération de puissance électrique requise du système de cellule à combustible sur la base des caractéristiques stables de l'accessoire (13),
corriger la consommation de puissance électrique d'accessoire en calculant une quantité de correction de puissance électrique de sorte que la consommation de puissance électrique d'accessoire stable approchera la consommation de puissance électrique d'accessoire effective et corriger la consommation de puissance électrique d'accessoire stable sur la base de la quantité de correction de puissance électrique, et
commander la génération de puissance du système de cellule à combustible (1) sur la base d'une génération de puissance électrique requise et la consommation de puissance électrique d'accessoire stable corrigée obtenue en corrigeant la consommation de puissance électrique d'accessoire sur la base de la quantité de correction de puissance électrique.

9. Méthode de commande du système de cellule à combustible (1) selon la revendication 8, dans laquelle la vitesse de correction de la consommation de puissance électrique d'accessoire et donc de suppression de déviation entre ladite consommation de puissance électrique d'accessoire stable et la consommation de puissance électrique d'accessoire effective est plus rapide que la vitesse de commande du système de cellule à combustible (1).

10. Méthode de commande du système de cellule à combustible (1) selon la revendication 8, dans laquelle la commande de la génération de puissance de la cellule à combustible (2) sur la base de la consommation de puissance électrique d'accessoire stable corrigée comprend d'utiliser la consommation de puissance électrique d'accessoire stable corrigée en commandant l'extraction de la puissance électrique de la cellule à combustible (2) et/ou la commande du gaz alimenté dans la cellule à combustible (2).

11. Méthode de commande du système de cellule à combustible (1) selon la revendication 8, dans laquelle la correction de la consommation de puissance électrique d'accessoire stable comprend de calculer la quantité de correction de puissance électrique sur la base d'une formule d'apprentissage qui prend comme entrée la génération de puissance électrique totale contenant la consommation de puissance électrique d'accessoire, et détermine la quantité de correction de puissance électrique en rafraîchissant les coefficients de la formule d'apprentissage.

12. Méthode de commande du système de cellule à combustible (1) selon la revendication 8, dans laquelle une étape de processus de mémorisation d'une quantité de correction de puissance électrique est aussi incluse qui classifie la quantité de correction de puissance électrique en régions de charge sur la base de la génération de puissance électrique de ladite cellule à combustible et mémorise la quantité de correction de puissance électrique pour chaque dite région de charge.

13. Méthode de commande du système de cellule à combustible (1) selon la revendication 8, dans laquelle la correction de la consommation de puissance électrique d'accessoire stable comprend :

prérégler une condition d'apprentissage pour rafraîchir la quantité de correction de puissance électrique;
empêcher le rafraîchissement de la quantité de correction de puissance électrique quand la condition d'apprentissage préréglée n'est pas satisfaite, et
permettre le rafraîchissement de la quantité de correction de puissance électrique quand la condition d'apprentissage préréglée est satisfaite.

14. Méthode de commande du système de cellule à combustible (1) selon la revendication 13, dans laquelle la condition d'apprentissage préréglée est :

que le système de cellule à combustible (1) soit dans un état de génération de puissance électrique stable ; ou
que du gaz soit alimenté dans la cellule à combustible (2) sur la base de l'exigence de génération de puissance électrique.

# FIG. 1

1: FUEL CELL SYSTEM
2: FUEL CELL STACK
3: CONTROLLER
4: HYDROGEN TANK
13: COMPRESSOR

# FIG. 2

TARGET TOTAL GENERATED POWER

REFERENCE TARGET TOTAL GENERATED POWER

REQUIRED GENERATED POWER (TARGET NET POWER)

| | |
|---|---|
| STEADY ACCESSORY POWER CONSUMPTION COMPUTING PART | 33 |

| | |
|---|---|
| LOAD PARAMETER DETECTING PART | 31 |

LOAD PARAMETER

| | |
|---|---|
| ACTUAL ACCESSORY POWER CONSUMPTION COMPUTING PART | 32 |

| | |
|---|---|
| ACCESSORY POWER CONSUMPTION CORRECTING PART (CORRECTION QUANTITY LEARNING) | 34 |

| | |
|---|---|
| ELECTRIC POWER CORRECTION QUANTITY STORAGE PART | 35 |

| | |
|---|---|
| ELECTRIC POWER GENERATION CONTROLLER | 36 |

EP 1 984 971 B1

# FIG. 3

START

201
COMPUTE REQUIRED
POWER GENERATION

202
COMPUTE TARGET TOTAL
POWER GENERATION

203
COMPUTE TARGET CURRENT

204
CONTROL GAS SUPPLY

205
CONTROL POWER
GENERATION

END

# FIG. 4

COMPUTE REQUIRED
POWER GENERATION

301
DETECT MANIPULATION
OF ACCELERATOR PEDAL

302
DETECT VELOCITY
OF VEHICLE

303
COMPUTE REQUIRED
POWER GENERATION

RETURN

# FIG. 5

REQUIRED POWER
GENERATION [kW]

INCREASE IN
VEHICLE VELOCITY

DECREASE IN VEHICLE VELOCITY

0

MANIPULATION AMOUNT OF
ACCELERATOR PEDAL [deg]

# FIG. 6

COMPUTE TARGET TOTAL
POWER GENERATION

401

COMPUTE STEADY ACCESSORY
POWER CONSUMPTION

402

COMPUTE ACTUAL
ACCESSORY POWER
CONSUMPTION

403

CORRECT ACCESSORY
POWER CONSUMPTION

404

COMPUTE TARGET
TOTAL POWER
GENERATION

RETURN

# FIG. 7

CORRECTION OF ACCESSORY
POWER CONSUMPTION

501
JUDGE WHETHER
LEARNING IS PERMITTED

502
COMPUTE POWER
CORRECTION AMOUNT

RETURN

# FIG. 8

JUDGMENT WHETHER
LEARNING IS PERMITTED

601
JUDGE STEADY
POWER GENERATION

602
IS
STEADY POWER
GENERATION
HALFWAY? — NO

YES

603
JUDGE WHETHER GAS IS
SUPPLIED WHEN POWER
GENERATION IS REQUIRED

604
IS
GAS SUPPLY
WHEN POWER GENERATION — NO
REQUIRED?

YES

605
LEARNING PERMISSION
FLAG←1

606
LEARNING PERMISSION
FLAG←0

RETURN

# FIG. 9

```
        ┌─────────────────────────┐
        │ COMPUTATION OF POWER    │
        │ CORRECTION QUANTITY     │
        └─────────────────────────┘
                    │
                    ▼                    701
        ┌─────────────────────────┐
        │ COMPUTE REFERENCE TARGET│
        │ TOTAL POWER GENERATION  │
        └─────────────────────────┘
                    │
                    ▼            702
              ╱─────────────╲
             ╱      IS       ╲     NO
            ╱   LEARNING      ╲──────────────────┐
            ╲ PERMISSION FLAG ╱                  │
             ╲    1?         ╱                   │
              ╲─────────────╱                    │
                    │ YES          703           │          706
                    ▼                            ▼
        ┌─────────────────────────┐   ┌─────────────────────────┐
        │ COMPUTE ERROR IN        │   │ COMPUTE POWER           │
        │ ACCESSORY POWER         │   │ CORRECTION QUANTITY     │
        │ CONSUMPTION COMPUTATION │   └─────────────────────────┘
        └─────────────────────────┘               │
                    │            704               │
                    ▼                              │
        ┌─────────────────────────┐               │
        │ LEARN POWER             │               │
        │ CORRECTION QUANTITY     │               │
        └─────────────────────────┘               │
                    │            705               │
                    ▼                              │
        ┌─────────────────────────┐               │
        │ STORE POWER             │               │
        │ CORRECTION QUANTITY     │               │
        └─────────────────────────┘               │
                    │◄─────────────────────────────┘
                    ▼
           ┌──────────────┐
           │   RETURN     │
           └──────────────┘
```

# FIG. 10

```
      ┌──────────────────────────┐
      │      STORE POWER         │
      │  CORRECTION QUANTITY     │
      └──────────────────────────┘
                  │
                  ▼
   ┌────────────────────────────────┐  801
   │   DETERMINE LOAD REGION         │
   │   THAT STORES POWER             │
   │   CORRECTION QUANTITY           │
   └────────────────────────────────┘
                  │                      802
                  ▼
   ┌────────────────────────────────┐
   │        STORE POWER              │
   │    CORRECTION QUANTITY          │
   └────────────────────────────────┘
                  │
                  ▼
         ┌──────────────────┐
         │      RETURN       │
         └──────────────────┘
```

# FIG. 11

```
      ┌──────────────────────────┐
      │     COMPUTE POWER        │
      │  CORRECTION QUANTITY     │
      └──────────────────────────┘
                  │                      901
                  ▼
   ┌────────────────────────────────┐
   │   DETERMINE LOAD REGION         │
   │   THAT STORES POWER             │
   │   CORRECTION QUANTITY           │
   └────────────────────────────────┘
                  │                      902
                  ▼
   ┌────────────────────────────────┐
   │      COMPUTE POWER              │
   │   CORRECTION QUANTITY           │
   └────────────────────────────────┘
                  │
                  ▼
         ┌──────────────────┐
         │      RETURN       │
         └──────────────────┘
```

# FIG. 12

COMPUTATION OF TARGET
TOTAL POWER GENERATION

1001

TARGET TOTAL POWER GENERATION =
REFERENCE TARGET TOTAL
POWER GENERATION +
POWER CORRECTION QUANTITY

RETURN

# FIG. 13

REQUIRED CURRENT
GENERATION [A]

DECREASE IN OPERATING
TEMPERATURE

INCREASE IN OPERATING
TEMPERATURE

0

TARGET TOTAL POWER GENERATION [kW]

# FIG. 14

CONTROL OF GAS SUPPLY

↓

COMPUTE TARGET
GAS PRESSURE — 1201

↓

CONTROL HYDROGEN
PRESSURE — 1202

↓

CONTROL AIR FLOW RATE — 1203

↓

CONTROL AIR PRESSURE — 1204

↓

RETURN

# FIG. 15

TARGET GAS PRESSURE [kPa-a]

TARGET CURRENT GENERATION [A]

# FIG. 16

TARGET AIR FLOW RATE [NL/min]

TARGET CURRENT GENERATION [A]

# FIG. 17

INSTRUCTED COMPRESSOR
ROTATION VELOCITY [rpm]

DECREASE IN TARGET
GAS PRESSURE

INCREASE IN TARGET
GAS PRESSURE

TARGET AIR FLOW RATE [NL/min]

# FIG. 18

# FIG. 19

REQUIRED POWER GENERATION

---- ACTUAL NOMINAL
POWER GENERATION

TIME

STEADY ACCESSORY POWER
CONSUMPTION
—— (USED IN POWER GENERATION
CONTROL AND GAS SUPPLY)

---- ACTUAL ACCESSORY
POWER CONSUMPTION

TIME

—— TARGET POWER GENERATION
(USED IN POWER GENERATION
CONTROL AND GAS SUPPLY)

---- ACTUAL TOTAL POWER GENERATION

TIME

# FIG. 20

COMPUTATION OF TARGET
TOTAL POWER GENERATION

1101

TARGET TOTAL POWER GENERATION ON THE
SIDE OF POWER GENERATION CONTROL =
REQUIRED POWER GENERATION +
ACTUAL ACCESSORY POWER CONSUMPTION

1102

TARGET TOTAL POWER GENERATION
ON THE GAS SUPPLY SIDE =
REFERENCE TARGET TOTAL
POWER GENERATION +
POWER CORRECTION QUANTITY

RETURN

# FIG. 21

NOMINAL POWER GENERATION

—— REQUIRED POWER GENERATION

---- ACTUAL NOMINAL POWER GENERATION

TIME

—— STEADY ACCESSORY POWER
CONSUMPTION
(USED IN POWER GENERATION
CONTROL AND GAS SUPPLY)

---- ACTUAL ACCESSORY POWER CONSUMPTION
(USED IN POWER GENERATION CONTROL)

ACCESSORY POWER CONSUMPTION

TIME

TOTAL POWER GENERATION

—·— TARGET POWER GENERATION
(USED IN POWER GENERATION
CONTROL AND GAS SUPPLY)
—— TARGET TOTAL POWER GENERATION
(USED IN GAS SUPPLY)
---- ACTUAL TOTAL POWER GENERATION

TIME

# FIG. 22

NOMINAL POWER GENERATION

—— REQUIRED POWER GENERATION

---- ACTUAL NOMINAL POWER GENERATION

TIME·

ACCESSORY POWER CONSUMPTION

—— STEADY ACCESSORY POWER CONSUMPTION
(USED IN POWER·GENERATION CONTROL AND GAS SUPPLY)

---- ACTUAL ACCESSORY POWER CONSUMPTION
(USED IN POWER GENERATION CONTROL)

TIME

TOTAL POWER GENERATION

—·— TARGET POWER GENERATION
(USED IN POWER GENERATION CONTROL AND GAS SUPPLY)

—— TARGET TOTAL POWER GENERATION
(USED IN GAS SUPPLY)

---- ACTUAL TOTAL POWER GENERATION

TIME

# FIG. 23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 2004185821